# EUROPEAN PATENT APPLICATION

(11) **EP 4 760 137 A1**
(43) Date of publication of application: **17.06.2026**
(21) Application number: 25222719.4
(22) Date of filing: 11.12.2025
(51) Int. Cl.: F16M 11/04, E05D 11/10, F16B 7/00, F16M 11/10, F16M 11/20, F16M 13/02, H04M 1/02

(54) **JOINT FOR A DISPLAY DEVICE**

(30) Priority: 13.12.2024 IT 202400028383
(71) Applicant: Synco Srl, 21046 Malnate (VA) (IT)
(72) Inventor: Monterisi, Sabrina, Malnate (VA) (IT)
(74) Representative: Veronesi, Angelo

(57) **Abstract**

A joint (10) for a display device (100), the joint (10) comprises a first body (20) and a second body (30) rotatably mounted together, the second body (30) is slidably mounted with the first body (20) to switch from an engaged configuration to a disengaged configuration, the first body (20) comprises a toothed ring nut (21), the second body (30) comprises at least a locking portion (31), wherein the engaged configuration provides that said at least a locking portion (31) is engaged with the toothed ring nut (21) preventing a rotation of the second body (30) relative to the first body (20).

## Description

The present invention relates to a joint for a display device.

There are, in the known state of the art, display devices that are for example devices supporting labels or accessories such as for example electronic labels or analogue labels or posters. A display device comprises a display element which, in the case of the label support device, is a slide adapted to support an accessory-holder such as a label-holder which is adapted to mount an electronic or analogue label or other types of labels or other types of accessories such as for example posters, a support adapted to be mounted with horizontal trays or shims, shelves, baskets, product containers, blister-holder hooks, a junction, also called joint, that is adapted to mount the display element and the support by switching them from a fixed configuration to a rotatable configuration in which the display element and the support rotate relative to each other.

The known joint comprises a first portion associated with the display element, a second portion associated with the support and a third portion. The third portion usually comprises a metal or plastic elastic element, in particular a coil spring. The third portion is slidably mounted with the first and/or second portion and allows, by means of the elastic element, to have the joint switch from the fixed configuration to the rotatable configuration.

There are in the known state of the art, more complex joints that support fishing rods such as US 2007/240358 A1 or that support smartphones such as US 11079064 B1, but these joints comprise many elements and are made to withstand much greater stresses and strains than those to which a joint for a display device is submitted.

Disadvantageously, the joint is complex and consists of at least three portions one of which is an elastic element, it is difficult to produce and wastes a lot of material to be produced making both production and assembly more difficult.

The aim of the present invention is to produce a joint for a display device that is simpler, easier to produce and that wastes much less material, is more durable, and can overcome the drawbacks of the known state of the art.

According to the invention, this aim is reached by a joint according to claim 1.

Another aim of the present invention is to produce a display device comprising a joint that is simpler, easier to produce and that wastes much less material, is more durable, and can overcome the drawbacks of the known state of the art.

According to the invention, this other aim is achieved by a display device according to claim 11.

Other features are provided in the dependent claims.

The features and advantages of the present invention will become more apparent from the following exemplary and non-limiting description, with reference to the appended schematic drawings, wherein:
Figure 1 is an exploded perspective view of a display device which is an accessory support device comprising a display element which is an accessory-holder connector, where the accessories may be, for example, label supports or poster supports, a support and a joint, wherein the support comprises a clamp separably mountable at a second portion of the joint, the display element is mounted in a single piece with a first portion of the joint, wherein the joint represents an embodiment of the present invention;
Figure 2 is a section view of the joint according to the present invention in an engaged configuration that corresponds to a position fixing configuration of the display element with the support;
Figure 3 is a section view of the joint of Figure 2 in a disengaged configuration, which corresponds to a configuration that allows a rotation of the display element relative to the support;
Figure 4a is a perspective view of the first portion of the joint that is associated in a single piece with the display element, which is the accessory-holder and is adapted to support an accessory to display, for example, a label;
Figure 4b is a side view of the joint of Figure 4a;
Figure 4c is a front view of the joint of Figure 4a;
Figure 5 is an enlarged section view of the first portion of the joint;
Figure 6 is an exploded perspective view of a display device comprising two joints according to an alternative embodiment of the present invention, wherein the support is the clamp and the display element is an accessory-holder adapted to separably mount an accessory for displaying, for example, the label;
Figure 7a is a perspective view of a first component and a second component, made in a single piece, of two joints of the display device of Figure 6;
Figure 7b is a side view of the components of Figure 7a;
Figure 7c is a front view of the components of Figure 7a;
Figure 8 is a section view of the components of Figure 7a;
Figure 9 is a perspective view of a display device according to an alternative embodiment comprising the joint of the present invention, wherein the support is a base and the display element is the accessory-holder adapted to separably mount the accessory for labels or other accessories;
Figure 10a is a first side view of the display device of Figure 9 in a first operating configuration;
Figure 10b is a second side view of the display device of Figure 9 in a second operating configuration;
Figure 11 is a perspective view of a display device according to an alternative embodiment comprising the joint of the present invention, wherein the support is a preferably magnetic base and the display element is a rod with one or more clips or hooks adjustable along the axis of the rod;
Figure 12a is a perspective view from behind of a display device according to a further embodiment comprising the joint of the present invention, wherein the support is a clip for a basket or product containers, with a metal wire, with a blister-holder hook and the display element is a coupling for an electronic label;
Figure 12b is a perspective view from the front of the display device of Figure 12a;
Figure 12c is an exploded perspective view of the display device of Figures 12a and 12b.

With reference to the figures, a joint 10 for a display device 100 is shown.

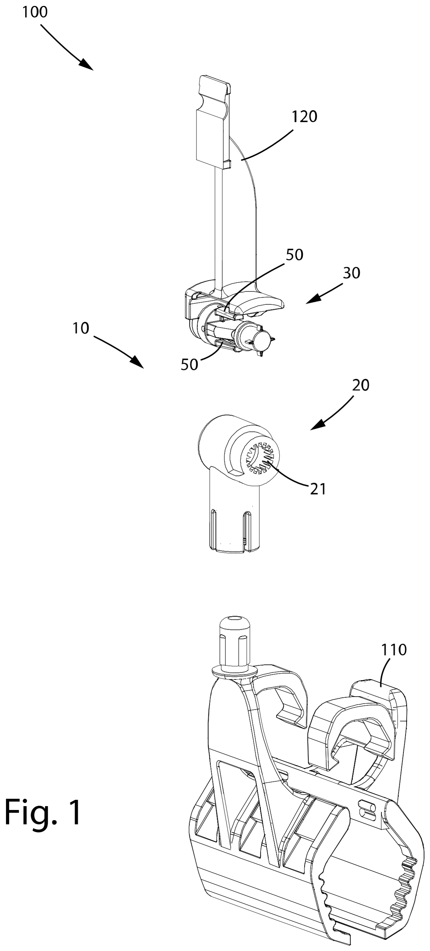

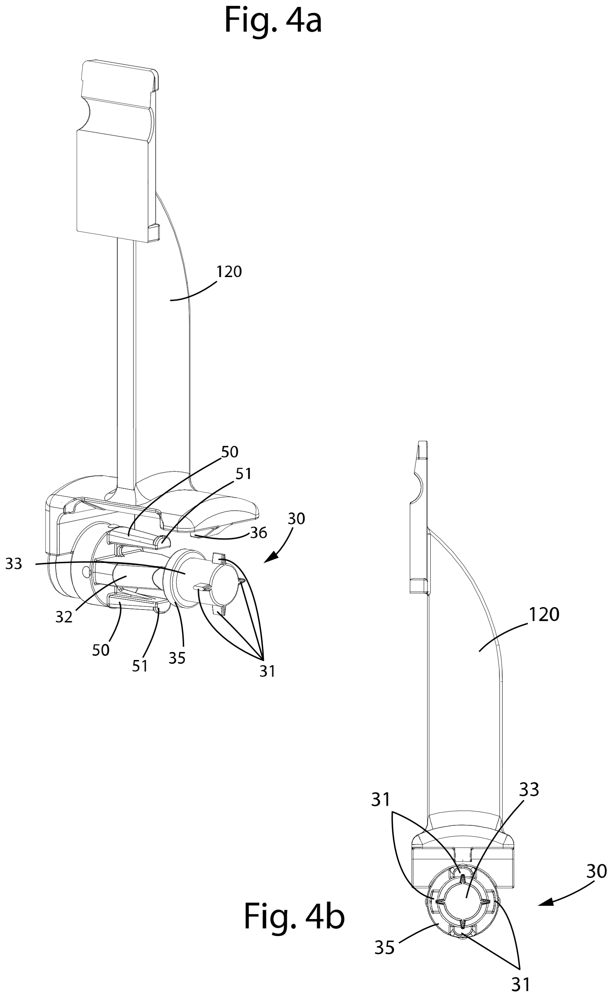

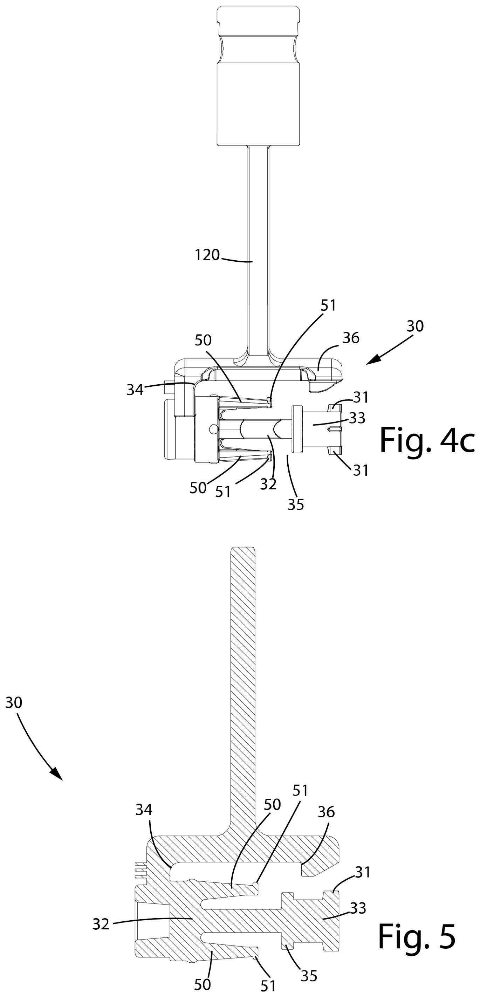

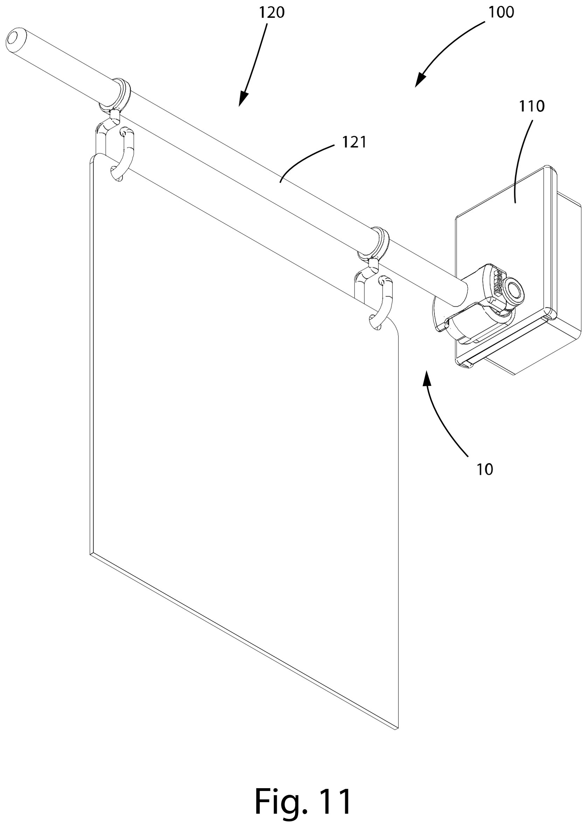

Advantageously, this joint 10 can be used with the display device 100 which comprises a support 110, adapted to be mounted for example to a tray or a horizontal shim or a shelf or a basket or product containers, with a metal wire, a blister-holder hook, and a display element 120 which is, in most cases shown in the figures, an accessory-holder adapted to support a label as shown in Figures 1, 4a-4c, 6, 9-10b, 12a-12c; alternatively the support may be a base with a rod as shown in Figure 11.

The joint 10 consists only of a first body 20 and a second body 30.

The second body 30 is rotatably mounted with the first body 20 about a rotation axis X.

The support 110 is adapted to be associated with one of the first body 20 and the second body 30, while the display element 120 is adapted to be associated with the other of the first body 20 and the second body 30.

In addition, the second body 30 is slidably mounted with the first body 20 along the rotation axis X to switch from an engaged configuration to a disengaged configuration.

Advantageously, the first body 20 and the second body 30 translate relative to each other along the rotation axis X to switch from the engaged configuration to the disengaged configuration.

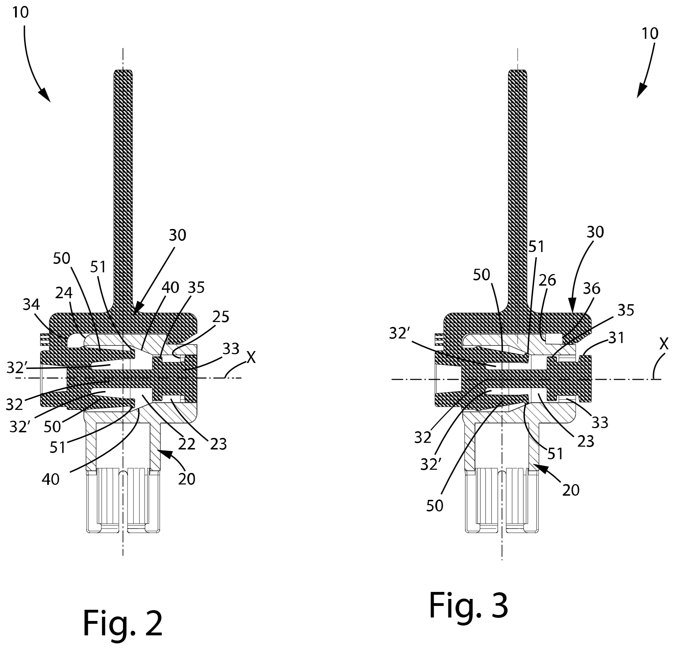

As shown in Figure 2 in the engaged configuration, the second body 30 is engaged with the first body 20. In this case, the second body 30 cannot rotate relative to the first body 20.

As shown in Figure 3, in the disengaged configuration, the second body 30 is disengaged from the first body 20. In this case, the second body 30 can rotate relative to the first body 20.

The switch from the engaged configuration to the disengaged configuration will be explained later in the present description.

The first body 20 comprises a toothed ring nut 21.

The toothed ring nut 21 is integral with the first body 20.

Preferably the toothed ring nut 21 is in a single piece with the first body 20.

The second body 30 comprises at least a locking portion 31.

Preferably said at least a locking portion 31 is in a single piece with the second body 30.

The engaged configuration provides that said at least a locking portion 31 is engaged with the toothed ring nut 21 preventing a rotation of the second body 30 relative to the first body 20.

The disengaged configuration provides that said at least a locking portion 31 is disengaged with the toothed ring nut 21 allowing the rotation of the second body 30 relative to the first body 20.

In addition, the joint 10 comprises at least an abutment wall 40.

Said at least an abutment wall 40 may be a wall of either the first body 20 or the second body 30.

Preferably said at least an abutment wall 40 may be an integral wall of the first body 20 or an integral wall of the second body 30.

Preferably said abutment wall 40 is conical.

The joint 10 further comprises at least an elastic portion 50.

Preferably, said at least an elastic portion 50 faces said at least an abutment wall 40.

Said at least an elastic portion 50 is an elastic portion of the first body 20 in the case where said at least an abutment wall 40 is a wall of the second body 30, while said at least an elastic portion 50 is an elastic portion of the second body 30 in the case where said at least an abutment wall 40 is a wall of the first body 20.

Said at least an elastic portion 50 is adapted to switch from a lower compression configuration with said at least an abutment wall 40 to a higher compression configuration with said at least an abutment wall 40.

The engaged configuration provides that at least an elastic portion 50 is in the lower compression configuration.

In the figures, it is shown that the elastic portion 50 is preferably in the lower compression configuration at rest, as, preferably, the elastic portion 50 is not pre-loaded.

The disengaged configuration provides that at least an elastic portion 50 is in the higher compression configuration.

When the joint 10 switches from the engaged configuration to the disengaged configuration, said at least an elastic portion 50 switches from the lower compression configuration to the higher compression configuration.

Said at least an abutment wall 40 loads said at least an elastic portion with an elastic force.

When the joint 10 is in the disengaged configuration, it is possible to rotate the second body 30 relative to the first body 20 until the desired relative angular position is reached.

At this point, in the case where the second body 30 is released relative to the first body 20, the loaded elastic force pushes said at least an elastic portion 50 to return to the lower compression configuration; consequently, the joint 10 returns to the engaged configuration.

Preferably, the toothed ring nut 21 comprises as many openings as the relative angular positions taken on by the second body 30 relative to the first body 20 in the engaged configuration.

The first body 20 comprises said at least an abutment wall 40 and the second body 30 comprises said at least an elastic portion 50, or the second body 30 comprises said at least an abutment wall 40 and the first body 20 comprises said at least an elastic portion 50.

Advantageously, the joint 10 provides only two bodies: the first body 20 and the second body 30, without providing for metal or plastic materials such as coil springs.

Said at least an elastic portion 50 is made in a single piece with the first body 20 or with the second body 30.

Preferably the first body 20 comprises a housing chamber 22.

The second body 30 is slidably mounted with the housing chamber 22 along the rotation axis X. While switching from the engaged configuration to the disengaged configuration, the second body 30 slides into the housing chamber 22.

Preferably the rotation axis X matches with the axis of the housing chamber 22.

Preferably said at least an elastic portion 50 may be inside the housing chamber 22.

Alternatively, said at least an elastic portion 50 may be outside the housing chamber 22.

Preferably in the case where the joint 10 comprises the housing chamber 22, the second body 30 may comprise a rod 32 adapted to slide inside the housing chamber 22.

In this case, the second body 30 comprises a guide portion 33. The guide portion 33 comprises said at least a locking portion 31.

Furthermore, also in this case, the housing chamber 22 comprises a socket portion 23 adapted to guide the guide portion 33.

The socket portion 23 guides the guide portion 33 while the joint 10 switches from the engaged configuration to the disengaged configuration and vice versa.

Preferably, the rod 32 and the guide portion 33 are in succession with each other along the rotation axis X. Preferably, the socket portion 23 is arranged at the end of the first body 20 relative to the rotation axis X.

Preferably, during the higher compression configuration, the guide portion 33 is at least partially extracted from the housing chamber 22.

Preferably, said at least an elastic portion 50 is at least a flexible fin 50 of the second body 30.

In this case, said at least an abutment wall 40 is a wall of the first body 20.

Preferably, said at least an abutment wall 40 is an inner wall of the housing chamber 22.

In this case, said at least an elastic portion 50 is arranged inside the housing chamber 22.

As shown in the figures, said at least a flexible fin 50 extends from the second body 30 and faces said at least an abutment wall 40.

More in detail, said at least a flexible fin 50 extends in the same extension direction as the rod 32, identifying at least one opening between the rod 32 and said at least a flexible fin 50.

Preferably, said at least a flexible fin 50 comprises an end portion 51 adapted to contrast with said at least an abutment wall 40 while the joint 10 switches from the disengaged configuration to the engaged configuration and vice versa.

For example, the end portion 51 is point-shaped and facilitates the switch of said at least a flexible fin 50 from the lower compression configuration to the higher compression configuration.

Preferably, said at least a flexible fin 50 is made in a single piece with the second body 30.

Preferably, said at least an abutment wall 40 is tapered. In other words, said at least an abutment wall 40 is shaped in such a way that it switches from a larger diameter to a smaller diameter.

In this case, while said at least a flexible fin 50 switches from the lower compression configuration to the higher compression configuration, said at least a flexible fin 50 gets compressed moving closer to the second body 30, more preferably to the rod 32.

On the other hand, while said at least a flexible fin 50 switches from the higher compression configuration to the lower compression configuration, said at least a flexible fin 50 gets decompressed moving away from the second body 30, more preferably from the rod 32.

Preferably said at least an elastic portion 50 is adapted to switch from the lower compression configuration to the higher compression configuration wherein said at least an elastic portion 50 is compressed against said at least an abutment wall 40.

Preferably, the socket portion 23 comprises the toothed ring nut 21. In this case, the toothed ring nut 21 comprises radial housings adapted to house said at least a locking portion 31 in the engaged configuration.

Preferably, these radial housings are arranged radially relative to the rotation axis X.

Furthermore, said at least a locking portion 31 protrudes radially relative to the rotation axis X.

Preferably, the locking portions 31 are a plurality of teeth arranged radially relative to the rotation axis X.

More preferably, the locking portions 31 are four in number. Even more preferably, the locking portions 31 are equally distant from each other.

Thus, the engaged configuration of the joint 10 is more stable.

Preferably, the flexible fins 50 are between two and four in number. In this case, the abutment wall 40 is conical.

Alternatively, at least a flexible fin 50 can be elastically pre-loaded.

Preferably, the first body 20 comprises a first end-stop protrusion 24. In this case, the second body 30 comprises a first end-stop abutment 34.

The higher compression configuration provides that the first end-stop protrusion 24 abuts against the first end-stop abutment 34.

In other words, the second body 30 may slide along the rotation axis X until the first end-stop protrusion 24 abuts against the first end-stop abutment 34, thus identifying the higher compression configuration.

Advantageously, the second body 30 cannot completely disassociate from the first body 20 while switching from the engaged configuration to the disengaged configuration.

Preferably, the first end-stop protrusion 24 is the outer edge of the wall delimiting the housing chamber 22. In this case, the end-stop abutment 34 is shaped in such a way as to be complementary to this edge.

Preferably, the socket portion 23 comprises a second end-stop protrusion 35. In this case, the toothed ring nut 21 comprises a second end-stop abutment 25.

In this case, the higher compression configuration provides that the second end-stop protrusion 35 abuts against the second end-stop abutment 25.

In other words, the second body 30 may slide along the rotation axis X until the second end-stop protrusion 35 abuts against the second end-stop abutment 25, thus identifying the higher compression configuration.

Advantageously, also in this case, the second body 30 cannot completely disassociate from the first body 20 while switching from the engaged configuration to the disengaged configuration.

Preferably, the second end-stop protrusion 35 is radially ring-shaped from the guide portion 33.

Preferably, the second end-stop abutment 25 is a wall of the toothed ring nut 21 transverse to the rotation axis X.

Preferably, the first body 20 comprises a third end-stop protrusion 26. In this case, the second body 30 comprises a third end-stop abutment 36.

The lower compression configuration provides that the third end-stop protrusion 26 abuts against the second end-stop abutment 36.

In other words, the second body 30 may slide along the rotation axis X until the third end-stop protrusion 26 abuts against the second end-stop abutment 36, thus identifying the lower compression configuration.

Advantageously, the second body 30 cannot completely disassociate from the first body 20 while switching from the disengaged configuration to the engaged configuration.

The present invention also relates to a display element device, globally referred to as 100.

The display device 100 comprises at least a joint 10.

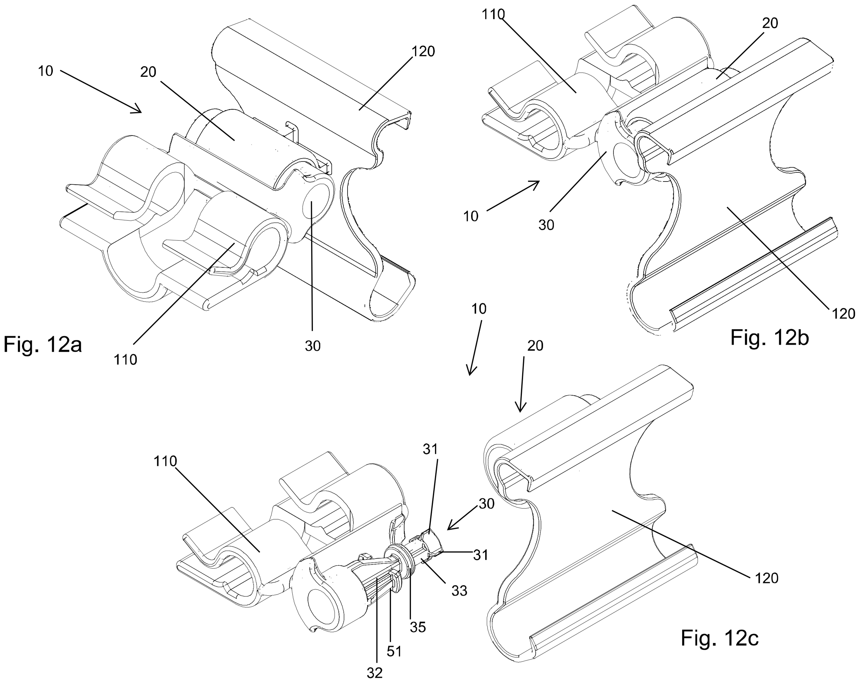

The display device 100 further comprises a support 110 adapted, for example, to be mounted to a tray or a horizontal shim or a shelf or a basket or product containers, with a wire, with a blister-holder hook, as for example shown in Figures 12a-12c. The support 110 is associated with one of the first body 20 and second body 30.

The display device 100 further comprises a display element 120 associated with another body between the first body 20 and the second body 30.

Preferably, as shown in the figures, the support 110 is associated with the first body 20 and the display element 120 is associated with the second body 30.

Alternatively, the support 110 is associated with the second body 30 and the display element 120 is associated with the first body 20.

Preferably, the display device 100 comprises a joint 10.

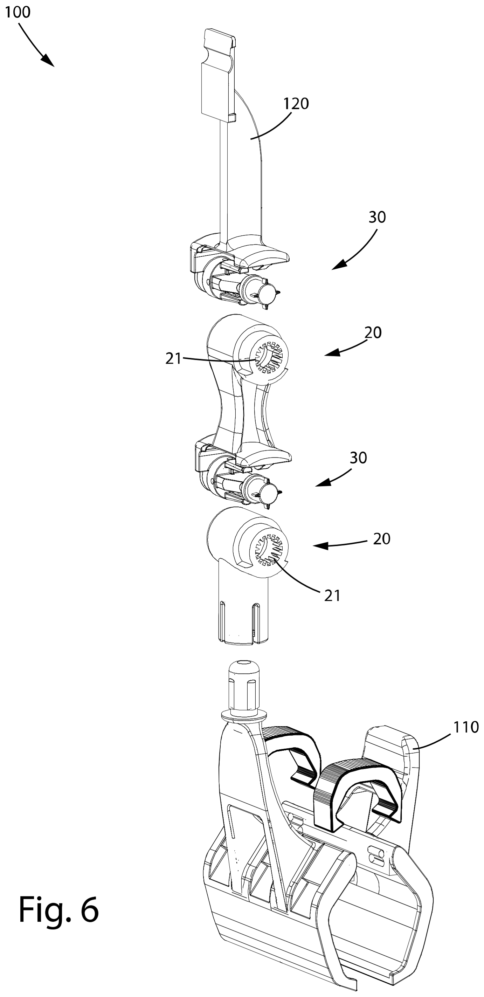

As shown in Figure 6, the display device 100 comprises two joints 10.

In this case, the joints 10 are mounted one after the other.

More specifically, the first body 20 of a first joint 10 is mounted with the second body 30 of a second joint 10. In addition, the second body 30 of the first joint 10 is mounted with the first body 20 of the second joint 10.

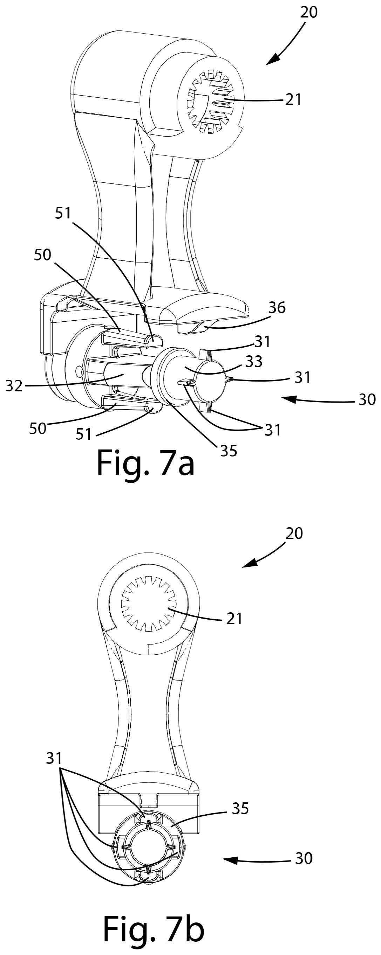

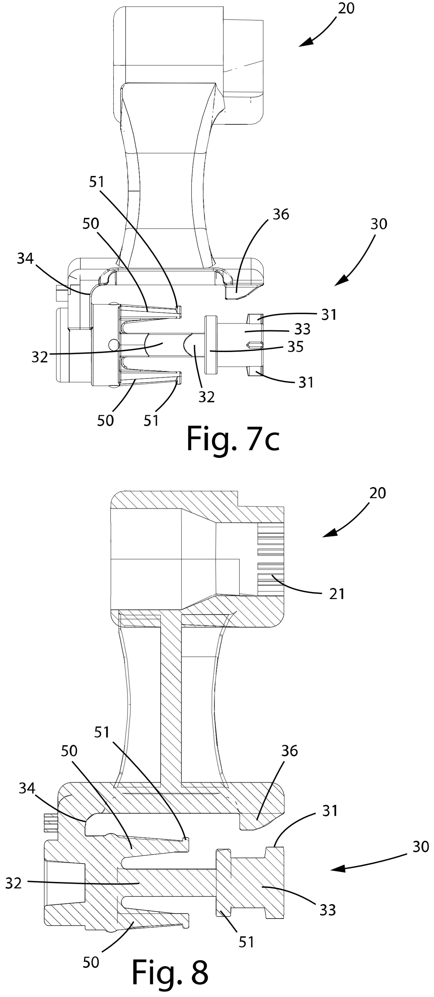

In this case, the first body 20 of the first joint 10 and the second body 30 of the second joint 10 can be made in a single piece, as shown in Figures 7a-8.

Furthermore, as shown in Figure 6, the support 110 is associated with the first body 20 of the second joint 10 and the display element 120 is associated with the second body 30 of the first joint 10, or vice versa.

Preferably, the support 110 is included in a list comprising: a clamp, a support base, such as those shown as examples in the figures, and a clip, not shown in the figures.

According to a first embodiment, as shown in Figure 1, the support 110 is a clamp.

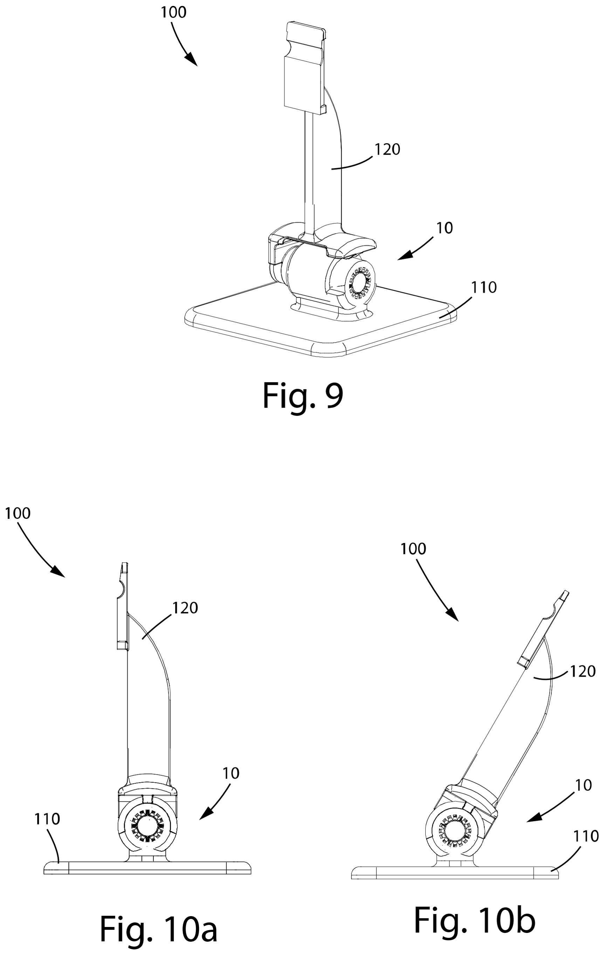

According to a second embodiment, as shown in Figure 9, the support 110 is a support base.

According to a third embodiment, as shown in Figure 11, the display device 100 comprises a display element 120 which in turn comprises the support rod 121 associated with the second body 30, and a base associated with the first body 20. Preferably the base is magnetic.

From the description given, the characteristics of the joint for a display device and a display device covered by the present invention are clear, as are the related advantages.

The fact that the joint is made up of the first body and the second body makes it possible to save in terms of production costs, as well as it makes it easier to assemble it and manufacture it, wasting much less material and time.

Finally, it is clear that a joint for a display device thus conceived is susceptible to numerous modifications and variations, all of which are covered by the invention; moreover, all details are replaceable by technically equivalent elements. In practice, the materials used, as well as their dimensions, can be of any type according to the technical requirements.

## Claims

1. Joint (10) for a display device (100),
wherein said joint (10) consists of a first body (20) and a second body (30), wherein said second body (30) is rotatably mounted with said first body (20) about a rotation axis (X),
wherein said second body (30) is slidably mounted with said first body (20) along said rotation axis (X) to switch from an engaged configuration to a disengaged configuration,
wherein said first body (20) comprises a toothed ring nut (21),
wherein said second body (30) comprises at least a locking portion (31),
wherein said engaged configuration provides that said at least a locking portion (31) is engaged with said toothed ring nut (21) preventing a rotation of said second body (30) relative to said first body (20),
wherein said disengaged configuration provides that said at least a locking portion (31) is disengaged from said toothed ring nut (21) allowing the rotation of said second body (30) relative to said first body (20),
wherein said joint (10) comprises:
- at least an abutment wall (40);
- at least an elastic portion (50) adapted to switch from a lower compression configuration with said at least an abutment wall (40) to a higher compression configuration with said at least an abutment wall (40);
wherein said engaged configuration provides that said at least an elastic portion (50) is in said lower compression configuration,
wherein said disengaged configuration provides that said at least an elastic portion (50) is in said higher compression configuration,
wherein said first body (20) comprises said at least an abutment wall (40) and said second body (30) comprises said at least an elastic portion (50)
or
wherein said second body (30) comprises said at least an abutment wall (40) and said first body (20) comprises said at least an elastic portion (50).

2. Joint (10) according to claim 1, **characterised in that** said first body (20) comprises a housing chamber (22), said second body (30) being slidably mounted with said housing chamber (22) along said rotation axis (X).

3. Joint (10) according to claim 2, **characterised in that** said second body (30) comprises:
- a rod (32) adapted to slide inside said housing chamber (22);
- a guide portion (33) comprising said at least a locking portion (31);
wherein said housing chamber (22) comprises a socket portion (23) adapted to guide said guide portion (33).

4. Joint (10) according to any one or more than one of the preceding claims, **characterised in that** said at least an elastic portion (50) is at least a flexible fin (50) of said second body (30), wherein said at least an abutment wall (40) is a wall of said first body (20).

5. Joint (10) according to any one or more than one of claims 3 or 4, **characterised in that** said at least an abutment wall (40) is an inner wall of said housing chamber (22), wherein said at least an elastic portion (50) is arranged within said housing chamber (22).

6. Joint (10) according to claim 5, **characterised in that** said at least an abutment wall (40) is tapered, wherein said at least an elastic portion (50) is adapted to switch from said lower compression configuration to said higher compression configuration wherein said at least an elastic portion (50) is pressed against said abutment wall (40).

7. Joint (10) according to any one or more than one of claims 3 to 5, **characterised in that** said socket portion (23) comprises said toothed ring nut (21), wherein said toothed ring nut (21) comprises radial housings adapted to house said at least a locking portion (31) in the engaged configuration, wherein said at least a locking portion (31) protrudes radially with respect to said rotation axis (X).

8. Joint (10) according to any one or more than one of the preceding claims, **characterised in that** said first body (20) comprises a first end-stop protrusion (24), wherein said second body (30) comprises a first end-stop abutment (34), wherein said higher compression configuration provides that said first end-stop protrusion (24) abuts against said first end-stop abutment (34).

9. Joint (10) according to any one or more than one of claims 3 to 8, **characterised in that** said guide portion (33) comprises a second end-stop protrusion (35), said toothed ring nut (21) comprising a second end-stop abutment (25), wherein said higher compression configuration provides that said second end-stop protrusion (35) abuts against said second end-stop abutment (25).

10. Joint (10) according to any one or more than one of the preceding claims, **characterised in that** said first body (20) comprises a third end-stop protrusion (26) and said second body (30) comprises a second end-stop abutment (36), wherein said third body (30) may slide along the rotation axis (X) until said third end-stop protrusion (26) abuts against said second end-stop abutment (36).

11. Display device (100) **characterised in that** it comprises at least a joint (10) according to any one or more than one of claims 1 to 10,
wherein said display device (100) comprises:
- a support (110) being associated with one of said first body (20) and said second body (30);
- a display element (120) associated with another body of said first body (20) and said second body (30).

12. Display device (100) according to claim 11, **characterised in that** it comprises two joints (10) mounted one after the other, wherein the first body (20) of a first joint (10) is mounted with the second body (30) of a second joint (10) and the second body (30) of the first joint (10) is mounted with the first body (20) of the second joint (10).

13. Display device (100) according to any one or more than one of claims 11 or 12, **characterised in that** said support (110) is included in a list comprising: a clamp, a support base, a preferably magnetic base.

14. Display device (100) according to any one or more than one of claims 11 to 13, **characterised in that** said display element (120) comprises a support arm (121).
